# FASCICULE DE BREVET EUROPEEN

(11) **EP 0 872 759 B1**
(45) Date de publication et mention de la délivrance du brevet: **12.12.2001**
(21) Numéro de dépôt: 97106355.7
(22) Date de dépôt: 17.04.1997
(51) Int. Cl.: G02F 1/137

(54) **Dispositif d'affichage à cristaux liquides destiné notamment à former un écran d'affichage d'images en couleur**
Flüssigkristallanzeige-Vorrichtung für einen farbigen Bildschirm
Liquid crystal display device for a color display panel

(43) Date de publication de la demande: 21.10.1998
(73) Titulaire: ASULAB S.A., CH-2501 Bienne (CH)
(72) Inventeur: Kipfer,Peter, 2000 Neuchâtel (CH); Herzig,Hans-Peter, 2000 Neuchâtel (CH); Klappert,Rolf, 2003 Neuchâtel (CH); Grupp,Joachim, 2003 Neuchâtel (CH)
(74) Mandataire: Ravenel, Thierry Gérard Louis

(56) Documents cités:
- US-A- 5 399 390
- US-A- 5 493 430
- G.P. CRAWFORD: "Liquid Crystal in Complex Geometries" , TAYLOR & FRANCIS , 1996 XP002041494 Page 255-264. Chapitre 11.2: Reflective Cholesteric Display * page 257 *
- KLIMUSHEVA G V ET AL: "External factor influence on the optical activity of chiral liquid crystals" NONLINEAR OPTICS OF LIQUID AND PHOTOREFRACTIVE CRYSTALS, CRIMEA, UKRAINE, 23-30 OCT. 1995, vol. 2795, ISSN 0277-786X, PROCEEDINGS OF THE SPIE - THE INTERNATIONAL SOCIETY FOR OPTICAL ENGINEERING, 1996, SPIE-INT. SOC. OPT. ENG, USA, pages 50-55, XP002041493

## Description

La présente invention concerne un dispositif d'affichage à cristaux liquides destiné notamment à l'affichage d'images en couleur et plus particulièrement un tel dispositif à cristaux liquides de type cholestérique permettant l'affichage des couleurs et notamment de la couleur rouge avec une grande pureté.

La caractéristique de certains cristaux liquides cholestériques est de présenter une structure périodique en hélice ayant un pas qui peut être ajusté. Cette structure hélicoïdale dite "planaire" provoque des réflexions de Bragg dont la bande de réflexion, c'est-à-dire la gamme de longueurs d'ondes qu'elle peut réfléchir, peut être facilement modifiée en variant le pas de l'hélice et/ou la biréfringence du cristal liquide.

Lorsque l'on applique une tension déterminée sur les électrodes de commande, on crée un champ électrique qui transforme la structure hélicoïdale du cristal en une structure dite "focal conic" quasiment transmissive et laisse apparaître la surface se trouvant derrière le cristal liquide, qui peut être par exemple de couleur noire si l'on souhaite réaliser un affichage sur fond noir comme cela est décrit dans la publication de D.K. Yang et al. intitulée "Cholesteric reflective display : scheme and contrast"; Appl. Phys. Lett. 64, Avril 1994 pages 1905 à 1907.

Lorsque dans un dispositif d'affichage on introduit entre deux plaques ou substrats plusieurs cristaux liquides cholestériques ayant respectivement un pas ajusté pour réfléchir une longueur d'onde correspondant à une couleur déterminée, on peut réaliser un réseau de pixels trichromes, chaque pixel étant composé par exemple de trois sous-pixels de couleurs primaires rouge, verte, et bleue respectivement. Sur les surfaces internes des plaques sont prévues des électrodes de commande formant par exemple une matrice et permettant d'exciter localement les cristaux liquides pour créer sélectivement un point d'image en couleur par mélange additif des trois couleurs primaires. Dans le cas où tous les sous-pixels sont dans l'état hélicoïdal dit "planaire", c'est-à-dire réfléchissant, la couleur résultante des pixels trichromes est blanche.

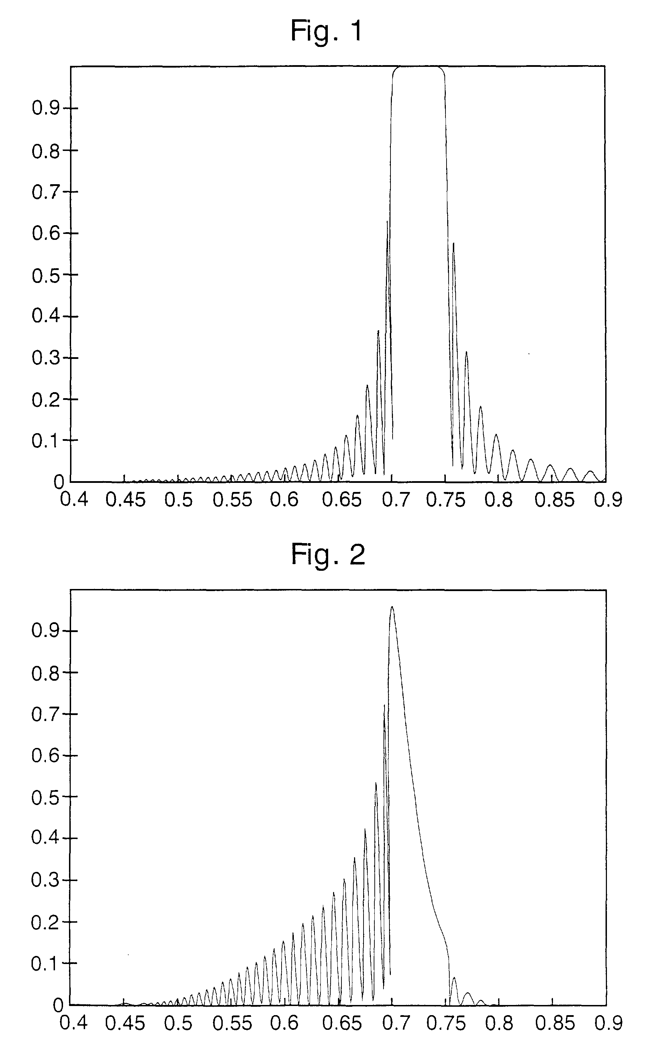

Alors que la réalisation des couleurs primaires verte et bleue ne pose pas de problème particulier, on a constaté que la couleur rouge obtenue avec ce type de dispositif d'affichage était toujours pâle, ce qui lui donne un aspect terne ou effacé. Ceci s'explique en analysant le spectre de réflexion du rouge par un cristal liquide de type cholestérique représenté à la figure 1. On remarque que la réflexion par le cristal liquide des longueurs d'ondes correspondant à la couleur rouge est imparfaite et que le spectre de réflexion présente des franges importantes de part et d'autre de la bande principale, qui nuisent à la pureté de la couleur. Ces effets de franges ont l'inconvénient supplémentaire d'être amplifiés par l'oeil humain comme on peut le constater à la figure 2 qui représente le spectre de réflexion de la figure 1 multiplié par la réponse de l'oeil humain, ce qui dégrade la couleur rouge et lui donne un aspect terne.

Pour remédier à ce problème, il a déjà été proposé dans l'ouvrage intitulé "Liquid Crystal in Complex Geometries", de Taylor et Francis, publié en 1996, page 257, une solution consistant à doper le cristal liquide avec un colorant qui est destiné à absorber les parties non désirées du spectre de réflexion.

Cette solution présente toutefois des inconvénients. En effet, l'effet optique obtenu n'est pas optimal car il se peut que la lumière réfléchie par le cristal liquide n'ait pas rencontré de molécules de colorant ou n'ait été modifiée que par peu de molécules de colorant, de sorte que la couleur est peu saturée ou en d'autres termes, n'est pas pure. Par ailleurs cette solution impose que le mélange du cristal liquide et du colorant soit séparé physiquement des autres cristaux liquides réfléchissant respectivement le vert et le bleu, afin d'éviter la diffusion des molécules du colorant dans les cristaux liquides voisins de couleurs différentes .

De plus, la faible stabilité chimique des molécules formant le colorant, notamment en présence de rayonnement U.V., réduit la fiabilité et la durée de vie du dispositif d'affichage.

L'invention a donc pour but principal de remédier aux inconvénients de l'art antérieur susmentionné en fournissant un dispositif d'affichage permettant l'affichage de caractères ou d'images en couleur ayant une qualité de couleur élevée et permettant notamment l'affichage d'un rouge ayant un grand degré de pureté.

A cet effet, l'invention a pour objet un dispositif d'affichage à cristaux liquides destiné notamment à former un écran d'affichage d'images en couleurs, du type comportant :
- un premier substrat transparent sur un côté avant situé du côté de l'observateur;
- un deuxième substrat disposé sur un côté arrière en regard du premier substrat et s'étendant parallèlement à ce dernier;
- le premier substrat étant relié au deuxième substrat afin de délimiter entre eux une cavité dans laquelle est disposé au moins un film de cristal liquide;
ledit cristal liquide pouvant avoir au moins un premier état dans lequel il réfléchit la lumière d'une gamme de longueurs d'ondes d'une couleur prédéterminée et au moins un deuxième état dans lequel il est transparent,
la surface de chaque substrat tournée vers l'autre substrat comportant des moyens formant électrodes pour permettre par l'application sélective d'une tension de commande auxdites électrodes, de faire passer le cristal liquide au moins du premier état vers le deuxième état,
caractérisé en ce qu'il comprend un filtre absorbant au moins les longueurs d'ondes visibles de la gamme de longueurs d'ondes de ladite couleur prédéterminée le plus proche de la longueur d'onde 555 nm et en ce que ledit filtre est disposé du côté du premier substrat devant ledit film de cristal liquide.

Ainsi, le filtre élimine du spectre de la lumière entrant dans la cellule, avant qu'elle entre dans le film de cristal liquide, les longueurs d'ondes visibles différentes de celle correspondant à la couleur que le cristal liquide doit réfléchir et qui pourrait détériorer la couleur prédéterminée. L'effet de franges évoqué ci-dessus est ainsi éliminé du spectre réfléchi par le cristal liquide, ce qui rend la couleur réfléchie par le cristal liquide plus pure et par conséquent plus vive.

Selon une caractéristique avantageuse, le filtre est disposé entre le premier substrat et le film de cristal liquide.

Une telle disposition permet au filtre d'être très proche du cristal liquide et d'éviter d'éventuels problèmes de parallaxe.

D'autres caractéristiques et avantages de l'invention apparaîtront plus clairement à lecture de la description suivante d'un mode de réalisation de l'invention donné à titre purement illustratif et non limitatif, cette description étant faite en liaison avec les dessins dans lesquels :
- la figure 1 est un exemple de spectre de réflexion du rouge d'un cristal liquide cholestérique;
- la figure 2 est une courbe représentant le spectre de la figure 1 multiplié par la courbe de réponse de l'oeil humain (courbe photopique).
- la figure 3 est une vue partielle en coupe d'un dispositif d'affichage selon un premier mode de réalisation de l'invention;
- la figure 4 est une vue partielle en coupe d'un dispositif d'affichage selon une variante du mode de réalisation de l'invention représenté à la figure 3; et
- la figure 5 est une vue partielle en coupe d'un dispositif d'affichage selon un deuxième mode de réalisation de l'invention.

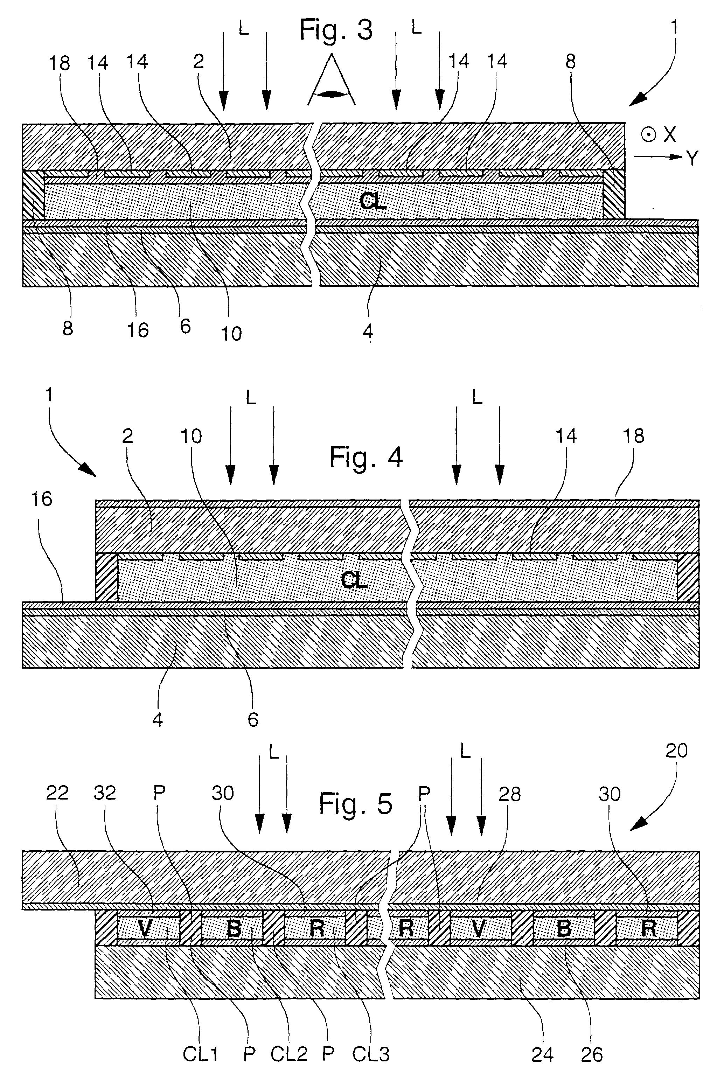

Dans la figure 3 on a représenté un premier mode de réalisation d'un dispositif d'affichage à cristaux liquides conforme à l'invention, désigné généralement par la référence numérique 1. Le dispositif d'affichage 1 qui est destiné notamment à former un écran d'affichage d'images en couleurs comprend un premier substrat transparent 2 disposé sur un côté avant, c'est-à-dire sur le côté le plus proche de l'observateur (symbolisé par un oeil à la figure 3), et un deuxième substrat 4 disposé sur un côté arrière, c'est-à-dire sur le côté le plus éloigné de l'observateur. Le deuxième substrat 4 s'étend en regard du premier substrat 2 et parallèlement à ce dernier. Les premier et deuxième substrats 2, 4 peuvent être réalisés en verre ou en une matière plastique, le deuxième substrat pouvant être opaque, par exemple de couleur noire. Le substrat 4 peut, comme c'est le cas dans l'exemple représenté, être revêtu d'une couche 6 absorbant la lumière, par exemple une couche noire disposée sur la face du deuxième substrat se trouvant en regard du premier substrat 2.

Dans l'exemple représenté, le premier substrat 2 est relié au deuxième substrat 4 par l'intermédiaire d'un cadre de scellement 8 afin de délimiter entre eux une cavité 10 dans laquelle est disposé un film de cristal liquide CL.

Le cristal liquide CL peut présenter au moins deux états, c'est-à-dire un premier état dans lequel il réfléchit la lumière d'une gamme de longueurs d'ondes correspondant à une couleur prédéterminée, par exemple le rouge et un deuxième état dans lequel il est transparent à la lumière.

La cellule décrite dans un tel exemple permet ainsi l'affichage de pixels rouges sur fond noir. Le cristal liquide utilisé est du type cholestérique. Plus précisément, le cristal liquide comprend un cristal liquide nématique ayant une anisotropie diélectrique positive et des dopants chiraux. Le cristal liquide peut le cas échéant comprendre également un polymère stabilisant les différents états du cristal liquide ou un colorant. Le pas du cristal liquide cholestérique est compris typiquement dans la gamme de 0,2 µm à 1,5 µm.

La surface du premier substrat 2 tournée vers le deuxième substrat 4 porte un premier groupe d'électrodes 14 disposées parallèlement à une première direction (direction appelée X par la suite). La surface du deuxième substrat 4 tournée vers le premier substrat 2 comprend un second groupe d'électrodes 16 disposées perpendiculairement aux électrodes du premier groupe (direction appelée Y par la suite). Cet agencement d'électrodes croisées permet de définir une matrice dont les pixels se situent aux points de croisement des électrodes respectives, chaque pixel étant capable de former un point d'image du dispositif d'affichage. Un tel point d'image est formé en appliquant des tensions de commande appropriées à des électrodes sélectionnées pour modifier les conditions optiques du cristal liquide situé au point de croisement considéré et commuter des pixels en plaçant le cristal liquide à ce point dans l'un des deux états mentionnés plus haut, comme cela est bien connu de l'homme de métier. On notera qu'avec ce type de cristal liquide, l'état dans lequel il a été commuté est maintenu jusqu'à ce qu'un nouveau champ électrique de commande soit appliqué au point considéré sans qu'il soit nécessaire de maintenir un champ électrique entre les deux électrodes concernées.

Chaque électrode des groupes 14 et 16 peut être formée par une bande conductrice déposée et structurée par des techniques classiques et réalisée de préférence en oxyde d'étain-indium (ITO).

Le dispositif d'affichage que l'on vient de décrire brièvement permet donc d'engendrer des images bichromes en appliquant des tensions de commande appropriées aux électrodes, par exemple par un procédé connu de multiplexage.

Selon l'invention, le dispositif comprend un filtre 18 qui est capable d'absorber au moins les longueurs d'ondes visibles qui sont situées du côté de la gamme de longueurs d'ondes de la couleur prédéterminée le plus proche de la longueur d'onde 555 nm. Cette longueur d'onde correspond à la longueur d'onde à laquelle l'oeil humain est le plus sensible en vision de jour (vision photopique). On comprendra bien entendu que le filtre 18 n'absorbe pas la gamme de longueurs d'ondes correspondant à la couleur prédéterminée, le rouge dans l'exemple décrit. Il va de soi que l'invention peut être également utilisée avantageusement avec des cristaux liquides de type cholestérique pouvant réfléchir d'autres couleurs comme le vert, le bleu etc.

Le filtre 18 est disposé du côté du premier substrat 2 devant le film de cristal liquide CL, c'est-à-dire avant que la lumière (symbolisée par les flèches L au dessin) qui entre dans le dispositif 1 ne pénètre dans le film de cristal liquide. Le filtre 18 peut ainsi fournir tout son effet et conduire à une amélioration efficace de la couleur prédéterminée, ici le rouge.

Selon un mode réalisation, le filtre 18 est disposé entre le premier substrat 2 et le film de cristal liquide CL et est par exemple déposé sous forme d'une couche uniforme sur toute la surface du substrat 2 au-dessus du premier groupe d'électrodes 14. Le filtre 18 peut être dans ce cas formé d'une couche de polymère chargée de molécules de colorant et déposée classiquement sur la surface du substrat.

Selon une variante de réalisation (non représentée), le filtre 18 est incorporé dans le substrat 2. En d'autres termes, le substrat forme lui-même le filtre 18 et est par exemple constitué d'une plaque de verre ou de matière synthétique chargée de molécules de colorant.

Selon une autre variante de réalisation, le filtre 18 est formé par un film coloré collé sur la surface du substrat 2 extérieure au dispositif comme cela est représenté à la figure 4.

Selon une autre variante de réalisation, le filtre 18 est peut être imprimé, par exemple selon la technique de sérigraphie classique, sur la surface du substrat 2 extérieure au dispositif.

On a représenté à la figure 5 un deuxième mode de réalisation d'un dispositif d'affichage 20 selon l'invention dans lequel le principe de l'invention est appliqué à un dispositif d'affichage à cristaux liquides destiné à former un écran d'affichage d'images en couleur.

Le dispositif d'affichage 20 comprend une cellule à cristaux liquides formée de deux substrats parallèles 22 et 24 entre lesquels sont disposés plusieurs cristaux liquides CL1, CL2 et CL3 juxtaposés, réfléchissant chacun la lumière d'une longueur d'onde prédéterminée. Dans l'exemple représenté, la cellule à cristaux liquides comprend trois cristaux liquides qui réfléchissent respectivement les couleurs verte (V), bleue (B) et rouge (R). Les trois cristaux liquides CL1, CL2 et CL3 sont répartis dans une pluralité d'ensembles adjacents E1, E2,....,En, formés de trois colonnes juxtaposées parallèles qui reçoivent chacune l'un des trois cristaux liquides CL1, CL2 et CL2 selon un ordre prédéterminé (V, B, R).

La séparation des colonnes de cristaux liquides peut être par exemple réalisée par l'intermédiaire de parois P délimitant des canaux parallèles s'étendant entre les substrats 22 et 24.

Le substrat 24 porte sur sa face intérieure une pluralité d'électrodes transparentes parallèles 26 qui s'étendent respectivement en regard des colonnes de cristaux liquides. Le substrat 22 porte également sur sa face intérieure une pluralité d'électrodes 28 parallèles, ces dernières s'étendant perpendiculairement à la direction des électrodes 26. Le croisement entre un groupe de trois électrodes 26 juxtaposées et associées respectivement aux cristaux liquides CL1, CL2, et CL3 avec une électrode 28 définit un pixel d'image, ce pixel comprenant trois sous-pixels, à savoir un sous-pixel vert V, un sous-pixel bleu B et un sous-pixel rouge R. Chacun de ces sous-pixels peut être adressé sélectivement via l'application d'une tension de commande appropriée aux électrodes 26 et 28 pour former un pixel de couleur.

Selon ce deuxième mode de réalisation de l'invention, les colonnes de cristal liquide (R) qui réfléchissent la gamme de longueurs d'ondes correspondant à la couleur rouge sont associées à des filtres 30 capables d'absorber les longueurs d'ondes visibles à l'exception de la gamme de longueurs d'ondes du rouge. Comme cela ressort clairement de la figure, les filtres 30 sont disposés entre les colonnes de cristal liquide (R) et le substrat 22, c'est-à-dire le substrat à travers lequel la lumière pénètre avant de traverser les cristaux liquides de la cellule.

De préférence, les filtres 30 sont disposés au-dessus des électrodes 28 de commande qui sont associées aux colonnes (R). Les filtres 30 peuvent être dans ce cas formés d'une couche de polymère chargée de molécules de colorant et déposée classiquement sur la surface intérieure du substrat 22, la couche étant ensuite structurée en colonnes à l'aide de masques appropriés selon les techniques de photolithographie bien connues de l'homme de métier.

On notera que, selon ce mode de réalisation, le substrat 22 comprend-en outre une couche 32 d'égalisation d'épaisseur disposée également sur la surface intérieure du substrat 22 soit aux endroits laissés libres entre les filtres 30, la couche 32 ayant sensiblement la même épaisseur que celle des filtres 30, soit pour noyer les filtres 30 et former une couche plane. Cette couche d'égalisation 32 permet d'assurer une épaisseur constante des cristaux liquides sur toute la surface de la cellule, ce qui garantit un affichage de qualité élevée. La couche 32 est optiquement inactive.

Selon une variante de réalisation non représentée, chaque colonne de cristal liquide est associée à un filtre analogue aux filtres 30 décrits ci-dessus et absorbant les longueurs d'ondes visibles dégradant la couleur que le cristal liquide réfléchit et auquel il est associé.

Bien que l'invention qui vient d'être décrite en liaison avec la figure 5 soit appliquée à un dispositif d'affichage à cristaux liquides destiné à former un écran d'affichage d'images en couleur comprenant une seule cellule dans laquelle les types de cristaux liquides différents s'étendant dans un même plan, il est bien entendu que l'invention n'est pas limitée à ce type d'affichage en couleur et que selon une variante de réalisation le dispositif peut comprendre deux cellules superposées ou plus comprenant respectivement au moins un type de cristal liquide, par exemple comme cela est décrit dans le brevet US 5,399,390.

## Revendications

1. Dispositif d'affichage à cristaux liquides destiné notamment à former un écran d'affichage d'images en couleurs, du type comportant :
- un premier substrat transparent sur un côté avant situé du côté de l'observateur;
- un deuxième substrat disposé sur un côté arrière en regard du premier substrat et s'étendant parallèlement à ce dernier;
- le premier substrat étant relié au deuxième substrat afin de délimiter entre eux une cavité dans laquelle est disposé au moins un film de cristal liquide;
ledit cristal liquide pouvant avoir au moins un premier état dans lequel il réfléchit la lumière d'une gamme de longueurs d'ondes d'une couleur prédéterminée et au moins un deuxième état dans lequel il est transparent,
la surface de chaque substrat tournée vers l'autre substrat comportant des moyens formant électrodes pour permettre par l'application sélective d'une tension de commande auxdites électrodes, de faire passer le cristal liquide au moins du premier état vers le deuxième état ou vice versa
**caractérisé en ce qu'**il comprend un filtre absorbant au moins les longueurs d'ondes visibles de la gamme de longueurs d'ondes de ladite couleur prédéterminée le plus proche de la longueur d'onde 555 nm et **en ce que** ledit filtre est disposé du côté du premier substrat par rapport audit film de cristal liquide.

2. Dispositif d'affichage selon la revendication 1, **caractérisé en ce que** ledit filtre est disposé entre le premier substrat et ledit film de cristal liquide.

3. Dispositif d'affichage selon la revendication 1 **caractérisé en ce que** ledit filtre est incorporé dans ledit premier substrat.

4. Dispositif selon la revendication 1, **caractérisé en ce que** le filtre est disposé à l'extérieur de la cellule devant le premier substrat.

5. Dispositif d'affichage selon l'une des revendications précédentes, **caractérisé en ce que** le cristal liquide est du type cholestérique.

6. Dispositif d'affichage selon la revendication 5, **caractérisé en ce que** le cristal liquide réfléchit la couleur rouge.

7. Dispositif d'affichage selon l'une des revendications précédentes, **caractérisé en ce que** le deuxième substrat comprend une couche absorbant la lumière.

8. Dispositif d'affichage selon l'une des revendications 1 à 5, **caractérisé en ce qu'**il comprend plusieurs cristaux liquides juxtaposés ou superposés réfléchissant chacun une gamme de longueurs d'ondes d'une couleur prédéterminée et **en ce que** ledit filtre est associé à au moins un des cristaux liquides.

9. Dispositif d'affichage selon la revendication 8 **caractérisé en ce qu'**il comprend une pluralité de cristaux liquides réfléchissant respectivement différentes couleurs dont la couleur rouge et **en ce que** le filtre est associé à la couleur rouge.

10. Dispositif d'affichage selon la revendication 9, **caractérisé en ce que** les cristaux liquides sont répartis dans une pluralité d'ensembles adjacents formés d'une pluralité de colonnes juxtaposées parallèles qui reçoivent chacun un desdits cristaux liquides selon un ordre prédéterminé.

11. Dispositif selon la revendication 8, **caractérisé en ce qu'**un filtre est associé à chacun desdits cristaux liquides.

## Claims

1. Liquid crystal display device intended, in particular, to form a colour image display screen, of the type including :
- a first substrate which is transparent on a front side situated on the side of the viewer;
- a second substrate arranged on a back side facing the first substrate and extending parallel to the latter;
- the first substrate being connected to the second substrate in order to delimit between them a cavity in which at least one film of liquid crystal is arranged;
said liquid crystal being able to have at least a first state in which it reflects the light of a range of wavelengths of a predetermined colour and at least a second state in which it is transparent,
the surface of each substrate facing the other substrate including means forming electrodes to allow by selective application of a control voltage to said electrodes, the liquid crystal to pass at least from the first state to the second state or conversely,
**characterized in that** it includes a filter absorbing at least the visible wavelengths of the range of wavelengths of said predetermined colour the closest to the wavelength 555 nm and **in that** said filter is arranged on the side of the viewer with respect to said film of liquid crystal.

2. Display device according to claim 1, **characterized in that** said filter is arranged between the first substrate and said liquid crystal film.

3. Display device according to claim 1, **characterized in that** said filter is incorporated in said first substrate.

4. Device according to claim 1, **characterized in that** the filter is arranged outside the cell in front of the first substrate.

5. Display device according to any of the preceding claims, **characterized in that** the liquid crystal is of the cholesteric type.

6. Display device according to claim 5, **characterized in that** the liquid crystal reflects the colour red.

7. Display device according to any of the preceding claims, **characterized in that** the second substrate includes a light absorbing layer.

8. Display device according to any of claims 1 to 5, **characterized in that** it includes several juxtaposed or superposed liquid crystals each reflecting a range of wavelengths of a predetermined colour and **in that** said filter is associated with at least one of the liquid crystals.

9. Display device according to claim 8, **characterized in that** it includes a plurality of liquid crystals reflecting respectively different colours including the colour red and **in that** the filter is associated with the colour red.

10. Display device according to claim 9, **characterized in that** the liquid crystals are distributed in a plurality of adjacent sets formed of a plurality of parallel juxtaposed columns which each receive one of said liquid crystals according to a predetermined order.

11. Device according to claim 8, **characterized in that** one filter is associated with each of said liquid crystals.

## Patentansprüche

1. Flüssigkristall-Anzeigevorrichtung, die insbesondere dazu bestimmt ist, einen Farbbild-Anzeigeschirm zu bilden, und von dem Typ ist, der umfaßt:
- ein erstes lichtdurchlässiges Substrat auf einer Vorderseite, die sich auf seiten des Beobachters befindet;
- ein zweites Substrat, das auf einer hinteren Seite gegenüber dem ersten Substrat angeordnet ist und sich parallel zu diesem letzteren erstreckt;
- wobei das erste Substrat mit dem zweiten Substrat verbunden ist, um dazwischen einen Hohlraum zu begrenzen, in dem wenigstens ein Flüssigkristallfilm angeordnet ist;
wobei der Flüssigkristall wenigstens einen ersten Zustand, in dem er das Licht eines Wellenlängenbereichs einer vorgegebenen Farbe reflektiert, und einen zweiten Zustand, in dem er lichtdurchlässig ist, annehmen kann,
wobei die Oberfläche jedes Substrats, die zum anderen Substrat weist, Mittel umfaßt, die Elektroden bilden, um den Flüssigkristall durch wahlweises Anlegen einer Steuerspannung an die Elektroden wenigstens vom ersten Zustand in den zweiten Zustand oder umgekehrt übergehen zu lassen,
**dadurch gekennzeichnet, daß** sie ein Filter umfaßt, das wenigstens die sichtbaren Wellenlängen des Wellenlängenbereichs der vorgegebenen Farbe, der sich am nächsten bei der Wellenlänge von 555 nm befindet, absorbiert, und daß das Filter auf seiten des ersten Substrats in bezug auf den Flüssigkristallfilm angeordnet ist.

2. Anzeigevorrichtung nach Anspruch 1, **dadurch gekennzeichnet, daß** das Filter zwischen dem ersten Substrat und dem Flüssigkristallfilm angeordnet ist.

3. Anzeigevorrichtung nach Anspruch 1, **dadurch gekennzeichnet, daß** das Filter in das erste Substrat eingebaut ist.

4. Vorrichtung nach Anspruch 1, **dadurch gekennzeichnet, daß** das Filter außerhalb der Zelle vor dem ersten Substrat angeordnet ist.

5. Anzeigevorrichtung nach einem der vorhergehenden Ansprüche, **dadurch gekennzeichnet, daß** der Flüssigkristall vom cholesterischen Typ ist.

6. Anzeigevorrichtung nach Anspruch 5, **dadurch gekennzeichnet, daß** der Flüssigkristall die Farbe Rot reflektiert.

7. Anzeigevorrichtung nach einem der vorhergehenden Ansprüche, **dadurch gekennzeichnet, daß** das zweite Substrat eine das Licht absorbierende Schicht umfaßt.

8. Anzeigevorrichtung nach einem der Ansprüche 1 bis 5, **dadurch gekennzeichnet, daß** sie mehrere nebeneinander oder übereinander angeordnete Flüssigkristalle umfaßt, die jeweils einen Wellenlängenbereich einer vorgegebenen Farbe reflektieren, und daß das Filter wenigstens einem der Flüssigkristalle zugeordnet ist.

9. Anzeigevorrichtung nach Anspruch 8, **dadurch gekennzeichnet, daß** sie mehrere Flüssigkristalle umfaßt, die jeweils unterschiedliche Farben reflektieren, zu denen die Farbe Rot gehört, und daß das Filter der Farbe Rot zugeordnet ist.

10. Anzeigevorrichtung nach Anspruch 9, **dadurch gekennzeichnet, daß** die Flüssigkristalle in mehreren benachbarten Einheiten verteilt sind, die aus mehreren nebeneinander liegenden, parallelen Spalten gebildet sind, die jeweils einen der Flüssigkristalle in einer vorgegebenen Reihenfolge aufnehmen.

11. Vorrichtung nach Anspruch 8, **dadurch gekennzeichnet, daß** jedem der Flüssigkristalle ein Filter zugeordnet ist.
